# EUROPEAN PATENT SPECIFICATION

(11) **EP 4 390 218 B1**
(45) Date of publication and mention of the grant of the patent: **08.04.2026**
(21) Application number: 22216668.8
(22) Date of filing: 23.12.2022
(51) Int. Cl.: G02B 6/02, F21V 8/00, G02B 6/036

(54) **STRONG, FATIGUE-RESISTANT OPTICAL FIBER WITH ENHANCED SIDE IRRADIATION**
STARKE, ERMÜDUNGSBESTÄNDIGE OPTISCHE FASER MIT VERBESSERTER SEITENBESTRAHLUNG
FIBRE OPTIQUE RÉSISTANTE À LA FATIGUE ET RÉSISTANTE À L'IRRADIATION LATÉRALE AMÉLIORÉE

(43) Date of publication of application: 26.06.2024
(73) Proprietor: biolitec Holding GmbH & Co KG, 1030 Wien (AT)
(72) Inventor: NEUBERGER, Wolfgang, 1010 Vienna (AT); GRISCHENKO, Andrey B., 1019 Riga (LV); HARSCHACK, Alexander, 53119 Bonn (DE); PETROV, Pavel, 5316 Livani (LV)
(74) Representative: Herrmann, Franz

(56) References cited:
- EP-A1- 2 551 706
- WO-A1-2015/056220
- US-B1- 6 398 778

## Description

The invention relates to a strong, fatigue-resistant all-silica optical fiber with enhanced side irradiation and sensing possibility.

There are a number of applications for illumination with or without temperature/stress sensing, that are best served by uniformly side radiation from optical fibers which are reliable and strong.

The common techniques used to achieve optical fiber side radiation effect are to remove its reflective cladding, micromachine the fiber surface, or taper the fiber tip, (Hyun Wook Kang, et al. J. Biomed, Optics, 17, 8001-1(2012) and van den Bergh et al. US 5,536,265 A (1996)). Flaws on the fiber surface can and do make such optical fibers in use somewhat more susceptible to mechanical failure due to less strength and greater susceptibility to fatigue. The drop in bending strength is dramatic for such side scattering optical fibers.

A more modern approach is to create a side radiating optical fiber to introduce scattering centers by focusing irradiation of laser pulses within the fiber's core (WO 2015/056220 A1, Chuang et al., US 2008/0158905 A1; and Rose et al., US2018/0113247 A1). These scattering centers introduce variations in the normal structure, which allow areas of differing refractive index compared to the bulk of the core material. The localized changes in structure in turn yield areas of disrupted strength. Limitations of standard scattering centers creation technique and currently marketed, standard all-silica fibers do not allow for manufacturing reliable and efficient side irradiation fibers. Hence, there is a need for new techniques and devices that overcome the abovementioned drawbacks and limitations of the prior art.

Proceeding from this related art, the present invention seeks to provide strong, fatigue-resistant optical fibers with enhanced side irradiation and sensing possibility, and to provide a method for its manufacturing.

This object is achieved by an optical fiber and a method having the features of the independent claims. Advantageous embodiments and refinements are specified in claims dependent thereon.

The optical fiber according to claim 1 comprises an outer cladding section surrounding an inner core section, the outer cladding section having a refractive index lower than the refractive index of the core section and the outer cladding section and the core section forming an optical light guide. The optical fiber further comprises an emission area associated with one emission end of the optical fiber, the emission area extending in the direction of a longitudinal axis of the optical fiber and being arranged for emitting radiation in a lateral direction with respect to the longitudinal axis of the optical fiber, wherein within the emission area, the core section is provided with a plurality of scattering sites, which are each formed by a local variation of the refractive index in the core sectior, characterized in that the core section surrounds an inner cladding section having an index of refraction lower than the index of refraction of the core section providing a tubular shape of the core section.

These optical fibers are unique structures, primarily because their inner recesses are a low index, cladding type silica, creating tubular optical fibers with a solid core. Previous tubular optical fibers had been formed from tubular preforms and had only air in the internal section of the fiber. This provided an optical fiber with lower bending strength and nearly twice the surface area, which would be exposed to the environment and its effects on the long-term reliability of the side-illuminating fibers.

This configuration of an optical fiber according to claim 1, provides efficient side irradiating solid optical fibers with one or more sites of side illumination, which have good bending strength and good fatigue resistance.

In a further embodiment, the optical fiber comprises an innermost section having a higher refractive index than the adjacent surrounding section wherein the refractive index of the innermost section and the adjacent surrounding section allow functionality of the innermost section as single or low mode optical waveguide. This embodiment provides a means for testing the stress or temperature of the optical fiber in the vicinity of the side irradiating sites thereby providing feedback to the user of the device, providing such localized information using an all-optical sensing system, in particular if the longitudinal innermost section has at least one fiber Bragg grating section in the emission area and can function as a fiberoptic stress and/or /temperature sensor.

The extension of the scattering sites is bigger in the direction of the longitudinal axis of the optical fiber than in a direction traverse to the longitudinal axis leaving a large portion of the cross section unaffected and thus contributing to the strength of the optical fiber.

The scattering sites may be distributed within the optical fiber according to various regular patterns providing scattering sites across the total cross section of the core section. The scattering sites may be arranged in a circumferential pattern, the diameter of the circumferential pattern varying regularly or irregularly along the longitudinal axis of the optical fiber. The scattering sites may in particular arranged in spirals whose rotational symmetry axis is oriented along the longitudinal axis.

The sections of the optical fiber are preferably made from silica glass, in which scattering sites for optical and infrared radiation can be created.

The scattering sites are at least at a 75 µm depth or at least at 200 µm depth from an outermost silica glass surface and/or at a depth of about 300 µm or less from the outermost glass surface, providing a bend strength of at least about 0.5 GPa.

The outermost cladding section may be protected by one or more non-silica protective coating and/or jacket layers contributing to the bend strength of the optical fiber, all of which are removed above the emission area.

The emission end of the optical fiber may be covered with a reflective coating. This reflective coating directs the non- scattered radiation back into the diffuser, increasing the efficiency of the diffuser.

A method for manufacturing the optical fiber creates the scattering sites by focusing femtosecond laser pulses at the intended scattering sites. This method allows to create scattering sites deep into the optical fiber.

The optical fiber may be moved by an xyz positioner while the optical fiber is exposed to the femtosecond laser pulses. This method allows to create complex patterns for the arrangement of the scattering sites that are optimized for efficient and homogenous emission.

Further advantages and properties of the present invention are disclosed in the following description, in which exemplary embodiments of the present invention are explained in detail based on the drawings
- Fig. 1: represents a drawing of an optical fiber and its dimensions;
- Fig. 2: is an enlarged representation of the emission area of the optical fiber from Fig. 1;
- Fig. 3a: is the refractive index profile of an embodiment having an outer cladding section and an inner core section;
- Fig. 3b: presents a refractive index profile of an embodiment similar to the embodiment of Fig. 3a having additionally an innermost section for sensing;
- Fig. 3c: presents a refractive index profile of an embodiment having an inner cladding section resulting in a tubular core section;
- Fig. 3d: presents a refractive index profile of an embodiment similar to Fig, 3c having additionally an innermost section part for sensing;
- Fig. 4: depicts an apparatus for introducing the scattering sites;
- Fig. 5: shows a diagram, in which the strength of some embodiments is plotted versus the depth of the scattering sites;
- Fig. 6: is a diagram, in which a maximal depth of scattering sites is plotted versus bare fiber diameter;
- Fig. 7: presents results on the efficiency of radial emission with embodiments of the present disclosure;
- Fig. 8: is a picture showing the distribution of the scattering sites inside the optical fiber; and
- Fig. 9: is a further picture showing the distribution of the scattering sites inside the optical fiber.

In should be noted in the following that the use of the same reference numerals in different figures indicates similar or identical items.

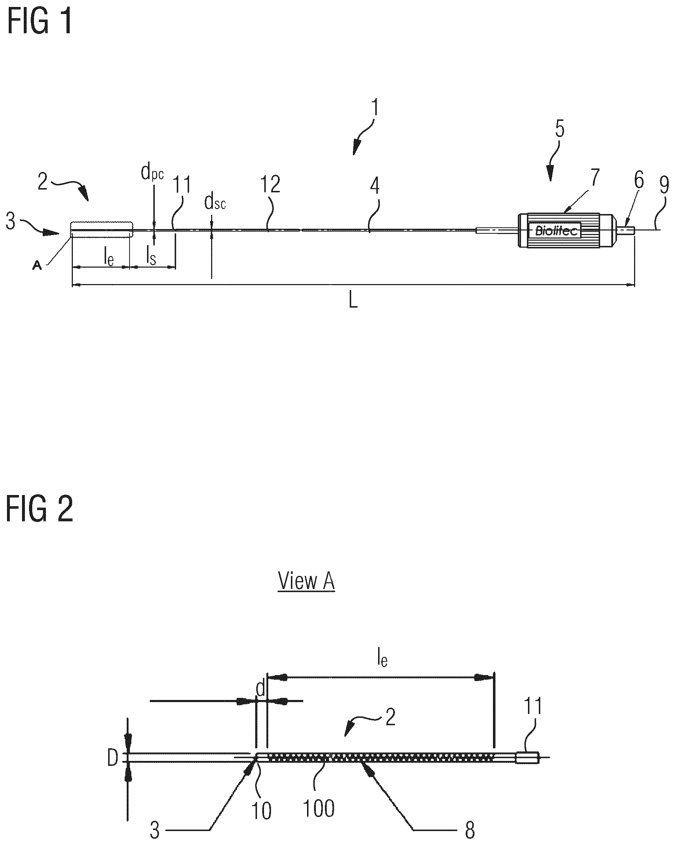

Fig. 1 represents a medical probe 1 having a light diffuser 2 on a distal end 3 of an optical fiber 4. Distal end 3 of medical probe 1 is surrounded by a square, which indicates the boundaries of an enlarged View A which is depicted in Fig. 2. A proximal end 5 of the medical probe 1 is equipped with connector 6 for connecting the optical fiber 4 to a laser, that emits radiation into the optical fiber 4. The connector 6 may be provided with a RFID over-sleeve 7 for identifying and administrating the medical probe 1. Entire probe length L of the medical probe 1 ranges between about 2 to 6 meters. The diffuser 2 is provided with an emission area 8, which varies in length Iₑ from 3 to 40 mm, with typical length Iₑ of 5 to 30 mm, and distance d of the emission area 8 from distal end 3 is about 1 mm as shown in Fig. 2. The emission area 8 scatters incoming light in lateral direction with respect to a longitudinal axis 9 of the optical fiber 4.

For medical probes 1 with short emission area 8 of 3 to 10 mm, a reflective coating 10 is deposited at the face of the distal end 3 with the required reflection coefficient at the working wavelength. This reflective coating 10 directs the non-scattered radiation back into the diffuser 2, increasing the efficiency of the medical probe 1.

In the diffusor 2, the bare silica lengths, which is generally somewhat bigger than the length Iₑ of the emission area 8, vary between 12 and 50 mm, with typical lengths of 17 to 37 mm. The diameter D of a silica surface of the optical fiber 4 is typically from 480 to 960 µm.

A length Iₛ of an area, in which the secondary jacked is stripped, is typically 20 mm beyond emission area 8. Typically, outer diameter d_{pc} of primary coating 11 is from 520 to 1100 µm, while outer diameter d_{sc} of secondary coating 12 is from 600 to 1300 µm.

The scattering within the emission area 8 is caused by a plurality of scattering sites 100 located with the emission area 8..

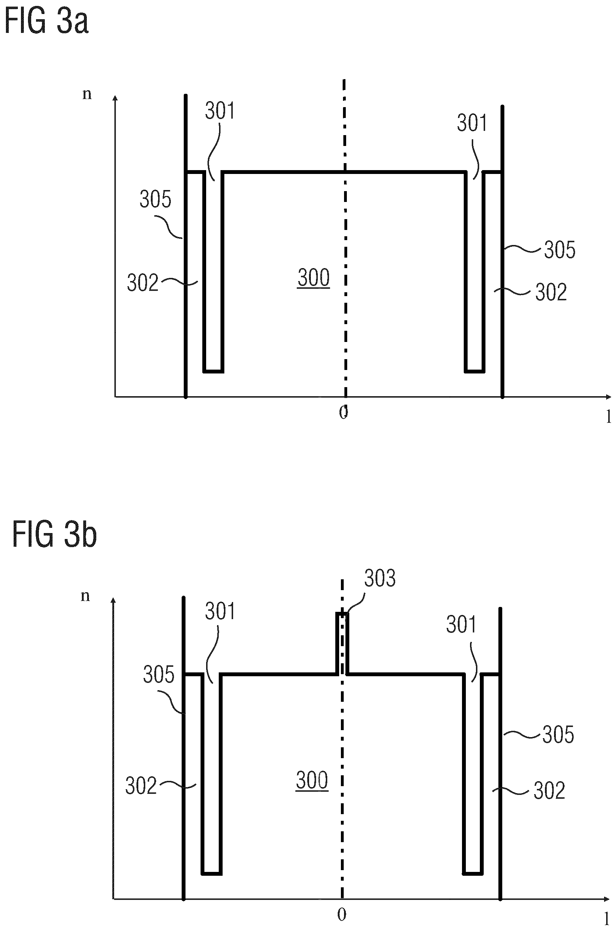

Fig. 3a to 3d represent possible refractive index profiles of the optical fiber DSc 4, which will be side illuminators of the present disclosure after undergoing the creation of scattering sites 100 as will be explained in more detail below.

The refractive index profiles of Fig. 3a to 3d show each the refractive index profile along a diameter of the circular cross section of the optical fiber 4.

In Fig. 3a, the simplest structure is presented with solid core section 300, surrounded by outer cladding section 301, whose index of refraction is lower than the index of refraction of the core section 300. The core section 300 and the outer cladding section 301, which acts as a reflective layer, form a light guide for the radiation emitted by the laser. The core section is generally made from undoped silica whereas the outer cladding section is made from fluorine dopes silica. A final thin layer of pure silica 302 surrounds the reflective outer cladding section 301

In Figure 3b, the optical fiber 4 is further provided with an innermost section 303, which is centered in the optical fiber and represents a low mode core surrounded by a tubular shaped core section 300 with outer cladding section 301 and final layer 302 of pure silica over the outer cladding section 301. The innermost section 303 is generally made from silica doped with GeO₂. The innermost section 303 may be a single or low mode core, sometimes called an oligomode or few mode fiber. Fiber Bragg Gratings (FBG) may be written into the innermost section 303 to provide stress and/or temperature sensing sites within the innermost section 303. In this case, independent radiation sources for the innermost section 303 and the side radiating core section 300 may be used.

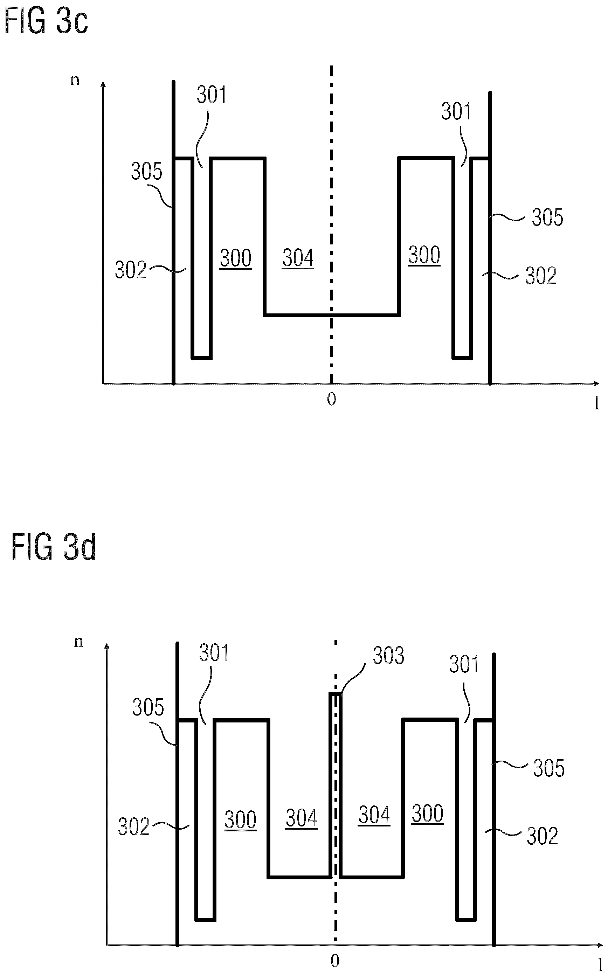

Examples of the refractive index profile with tubular core section 300 are depicted in Fig. 3c and 3d.

In Fig. 3c, the optical fiber 4 further comprises an inner cladding section 304 surrounded by tubular core section 300 and outer cladding section 301, which typically has the same or lower refractive index comparatively to inner cladding section 304.

Figure 3d has again an additional high index innermost section 303 within inner cladding section 304 and tubular core section 300.

It should be noted that, in the embodiments of Fig. 3a to 3d, an outer silica surface 305 is formed by the outer surface of the final layer 302 but may also be formed by the outer surface of the outer cladding section 301 if the final layer 302 is omitted.

The optical fibers 4 of the present disclosure are drawn from special preforms, which are structured in the following manner.

In the simplest case from Figure 3a, a pure silica core rod is used as the starting point for plasma outside vapor deposition, (POVD), of cladding type silica to provide the outer cladding section 30 for generating an optical guide with the desired numerical aperture (NA) and necessary minimal thickness, which will ensure, in the optical fiber 4, no leakage of evanescent waves via outer cladding section 301. In some cases, to build up the overall silica dimension, some additional pure silica can be deposited over the outer cladding section 301. During the draw process the draw ratio is chosen to arrive at the desired sizes of the final optical fiber 4 and the various jackets are applied to preserve the inherent strength of the sections with the optical fiber that are made from silica. Generally, a polyimide jacket is first applied with a Tefzel (DuPont TM) or nylon over jacket.

For example, a typical optical fiber 4 with the refractive index profile from Figure 3a is designated as OPTRAN^{®} WF 595 / 630 / 715 // 760 / 900 PT, which means:
- OPTRAN^{®}- trade mark of CeramOptec fibers,
- WF (water free) means core material is based on silica with low OH content,
- 595 - outer diameter of core section 300 in µm,
- 630 - outer diameter of outer cladding section 301 in µm,
- 715 - total silica diameter of optical fiber 4 in µm,
- 760 - diameter of primary coating in µm,
- 900 - diameter of secondary jacket,
- P - Polyimide is used as primary coating,
- T - Tefzel is used as secondary jacket.

Typical tolerances of this optical fiber 4 are for silica diameter ± 2% and for plastic jacket ± 3%.

For manufacturing the embodiment of Figure 3c, one can start with a cladding type silica rod of sufficient thickness for the desired inner final dimension of the inner cladding section 304 of the optical fiber 4, then apply the pure silica for the tubular core section 300 by POVD or a tube sleeving process followed by the addition of another cladding type silica to provide the outer cladding section 301 to the preform, and final outer layer of pure silica at a desired clad/core diameter ratio to complete the preform. During drawing down to desired fiber dimensions, the protective coatings are added as noted above. This example has a refractive index profile as shown in Fig. 3c.

In the case of the sensing embodiment fiber, an innermost core type silica rod can be used for innermost section 303 and cladding type silica is deposited over the rod by a POVD process and then pure silica, which has a higher refractive index is either deposited by POVD or by a tube sleeving process. Another section of cladding type silica is deposited over the tubular core section 300 to provide the outer cladding section 301 for generating an optical guide with the desired numerical aperture (NA) and sufficient minimal thickness. Further POVD deposition of extra layer of pure silica allows fine tuning to achieve required overall dimensions. The refractive index of such a preform and optical fiber 4 drawn from it is shown in Fig. 3d.

As for typical dimensions for these optical fibers 3, the core section 300 has an outer diameter from 400 to 800 µm; the outer silica diameter of the final layer 302 is from 480 to 960 µm and inner cladding section 304 has an outer diameter from 200 to 450 µm within tubular core 300. For the sensing versions of the present invention, innermost part 303 has a diameter from 5 to 21 µm.

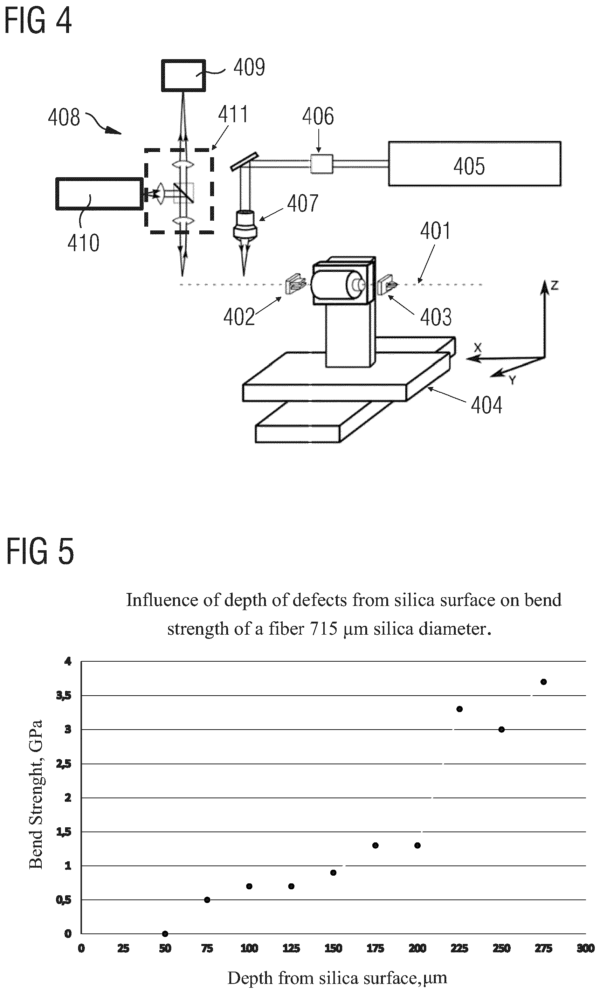

Figure 4 depicts the setup for creating the scattering sites 100 within the optical fiber 4. The optical fiber 4 whose longitudinal axis coincides with a rotary axis 401 is firmly held by adjustable fiber holder 402 and adjustable fiber gripper 403 attached to a three-axis (XYZ) precision positioning stage 404. Fiber gripper 403 is able to rotate the optical fiber 4 around the rotary axis 401. Femtosecond laser system 405 is positioned with inline attenuator 406 and focusing system 407 to create the scattering sites 100 in the emission area 8. Process is monitored by a digital microscope 408, equipped with camera 409, illumination light source 410 and microscope objective 411. During the generation of the scattering sites 100, the optical fiber 4 is translated by the positioning stage 404 and rotated around the rotary axis 401 such that the focus of the laser beam is at the desired position within the optical fiber 4 for generating a scattering site 100 within the core section 300 of the optical fiber 4. By applying laser radiation on the optical fiber 4 the density of the silica is changed. The laser radiation may even generate void with the silica of the core section 300. In some cases, cracks are formed in the silica.

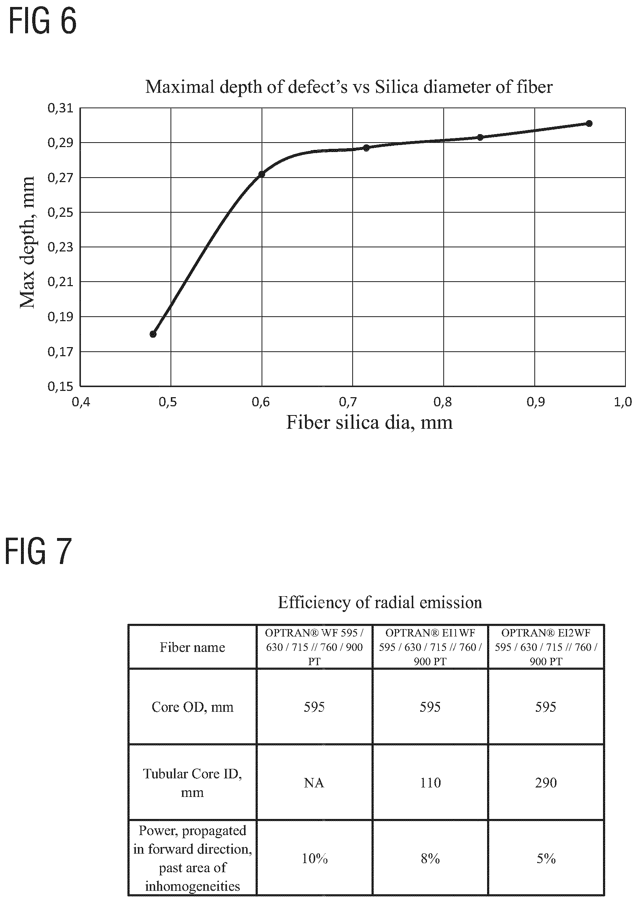

While the present invention works well with optical fibers 4 constructed with refractive index profiles such as Fig. 3a, b; the better and preferred embodiments are fibers whose refractive index profiles follow those of Fig. 3c and 3d, in particular optical fibers 4 having a tubular core section 300. In these optical fibers 4, more of the space of the core section 300 can have scattering sites 100 than in the former case. Some of the reasoning for this effect is disclosed in the analysis of Figure 6.

Fiber strength has been found to dramatically depend on distance from scattering defect to the outer silica surface of the optical fiber 4. Figure 5 shows this dependency. Choosing 0.5 GPa bend strength as an acceptable minimal strength for practical reasons, Fig. 5 suggests that for a well handleable probes 1, scattering defects for the diffuser 2 should be created at or deeper than 75 µm from an outer silica surface 305 of the optical fiber 4.

On the other hand, the presence of changes in refractive index inside a fiber body and the cylindrical outer silica surface 305 of the optical fiber 4 creates disturbances for accurate laser beam focusing deep inside the core section 300 since the cylindrical shape of the optical fiber 4 result in effective cylindrical lens for the laser beam of the femtosecond laser system 405. A bigger diameter of the optical fiber 4 result in a smaller curvature of the outer silica surface 305, so that the laser beam can be focused deeper in the core section 300. Figure 6 represents the influence of the diameter of outer silica surface 305 on maximum depth of useful, efficient scattering sites 100. As the diameter of the optical fiber 4 becomes larger, the curvature of the outer silica surface 305 becomes less dramatic. Naturally, the attenuation through the silica material also bears on the efficiency of creating inhomogeneities deep within the core section 300 of the optical fiber 4. In practice, scattering sites 100 could be created up to a depth of 200 to 300µm from the outside silica surface 305.

In sum, it is demonstrated that simply placing refractive index inhomogeneities within the core at least at 75 µm deep from the outer silica surface 305, provides strong, handleable, side illuminating optical fibers 4 for various applications.

The scattering sites 100 can be created only in tubular volumes of the optical fiber 4 with depth from 75µm to 200-300µm, where maximal depth depends on diameter of the optical fiber. The scattering sites 100 could not be created inside a central part of the optical fiber 4 with diameters under studies. To compare different fiber designs for efficiency of side irradiation various fiber design were studied for unwanted power, propagated in forward direction. The studied designs were the standard fiber design of Fig. 3a and the tubular core design of Figure 3c. The results are shown in the table of Fig. 7.

Fig. 7 provides evidence of how the tubular core structure enhances the efficiency of side radiation; including the effect of the size of the internal cladding section 304. The diameter of the inner cladding section 304 of the EI2 fiber is larger than that of EI1, and length of area of inhomogeneities is 20mm for all fibers. As can be seen a significant amount of light passes the section of inhomogeneities in the standard type core (leftmost column) compared to either size of tubular type core. It should also be noted that a larger inner cladding section 304 provides for a thinner cross-section of the tubular core section 300, and the efficiency of the side illumination scattering is greater, as seen by the diminished forward power level in the rightmost column.

The optical fiber 4 having a solid tubular core section 300 are a preferred structure, and most preferred embodiments of the present invention, and are particularly suited to contain a low mode innermost section 303, which can serve as a continuous, all-optical sensor, detecting temperature and/or stress in situ of the side illuminating sections while the probes 1 are in use.

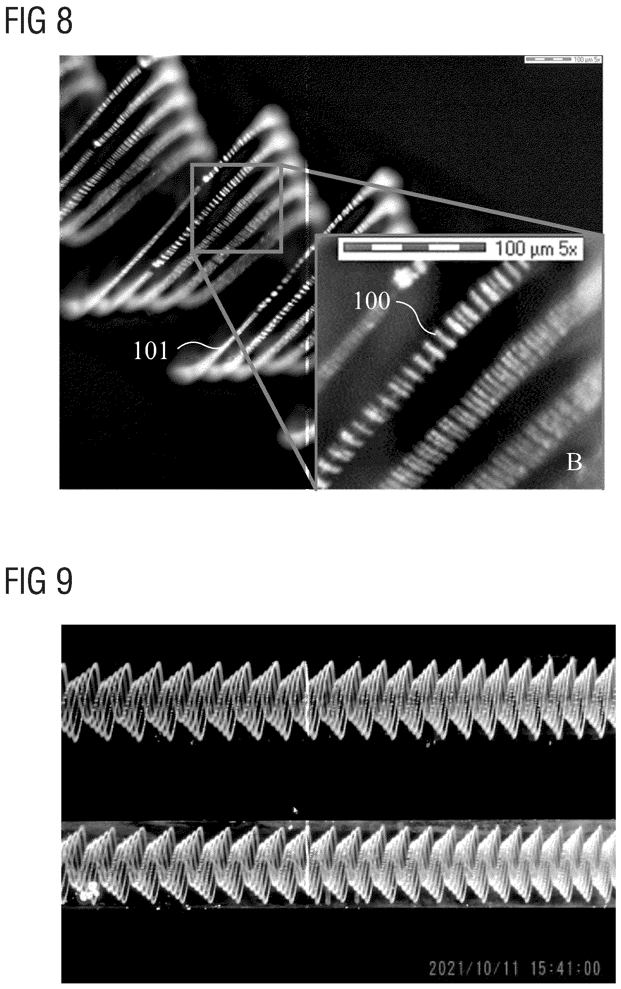

It should be noted that a very regular and precise pattern of the scattering sites 100 can be introduced along a length of the optical fiber 4. This leads to a more uniform side-irradiation pattern from the optical fiber 4 in use, compared with earlier prior art attempts to provide side illumination of extended areas. Fig. 8 shows the scattering sites 100 form five spirals 101 having different diameters but the same pitch. The spirals 101 are aligned along the longitudinal axis 9 of the optical axis. The scattering sites 100 here have a 20 µm length along the longitudinal axis 9 and about a 5 µm diameter in a direction transverse to the longitudinal axis. More generally, the scattering sites 100 may vary on their long axis in the range of 13-31 µm depending on the depth of the site, while the short axis vary in size between around 4 to 6 µm, and this is independent of depth. Section B is an enlarged view of inhomogeneities 100.

The pitch of the spirals 101 can also vary along the longitudinal axis 9 as can be recognized from Fig. 9. In the pictures depicted in Fig. 9, the pitch decreases towards the distal end 3, thus effectively increasing the density of the scattering sites 100 per volume. The intensity of the lateral emission may then become more homogenous as the decreasing intensity of the laser radiation towards the distal end 3 is compensated by the increasing density of the scattering sites 100.

Embodiments of present disclosure provide a tubular core optical fiber with excellent side irradiating ability with a solid innermost section, comprised primarily of low index cladding type glass. The low index area, surrounding inner surface of tubular core allows more effective side irradiation of the fiber.

The optical fiber can also contain an innermost single or low mode core, sometimes called an oligomode or few mode fiber, in which fiber Bragg gratings are written along the optical fiber to provide stress/temperature sensing sites in an innermost core of the side irradiating optical fiber. This innermost core is positioned in the center of the all-silica optical fiber and serves solely for temperature and stress sensing. Innermost core does not significantly participate in guiding of light power to be scattered in diffusor sections. Embodiments of present disclosure create the desired scattering sites within about 75 µm to 300 µm of the outermost surface of the outer cladding of the tubular core optical fiber. Embodiments of present disclosure use a femtosecond pulse laser to create desired scattering sites within the tubular core to enhance uniform side irradiation in desired portions along the optical fiber.

In the present disclosure, a solid, all-silica optical fiber with a tubular core is provided wherein within the core a series of scattering sites have been induced by focusing pulses of a femtosecond, high power density laser at the intended scattering sites. The scattering sites are created, generally, at or between 75 µm and 300 µm from the outer surface of the outermost cladding of the silica glass. Minimal depth of scattering sites defines fiber strength and is the same for fibers with different diameter. The optical fiber itself acts as cylindrical lens and this effect defines maximal depth of scattering sites. Maximal depth is mostly defined by fiber diameter. Such fibers have enhanced, uniform side irradiation in use.

In contrast to earlier attempts, the new enhanced side irradiation optical fibers have a more uniform longitudinal scattered power distribution, do not contain any plastic material in diffusing sections, can simultaneously monitor temperature and stress during operation, are sufficiently mechanically and thermally strong for most applications. In contrast to earlier attempts at side irradiating optical fibers, these new all-silica optical fibers are strong and resist fatigue in use, and the design of tubular core allows efficient side irradiation for fibers with different silica diameters. Bend strength is at least about 0.5 GPa.

The probes described herein are particularly suited for : Laser Induced Thermal Treatment (LITT) and Photodynamic Therapy (PDT) in a power range of 1 to 10 Watt.

## Claims

1. An optical fiber comprising:
an outer cladding section (301) surrounding an inner core section (300), the outer cladding section (301) having a refractive index lower than the refractive index of the core section (300) and the outer cladding section (301) and the core section (300) forming an optical light guide;
an emission area (8) associated with one emission end (3) of the optical fiber, the emission area (8) extending in the direction of a longitudinal axis (9) along the optical fiber and being arranged for emitting radiation in a lateral direction with respect to the longitudinal axis (9) of the optical fiber;
wherein within the emission area (8), the core section (300) is provided with a plurality of scattering sites (100), which are each formed by a local variation of the refractive index in the core section (300),
**characterized in that**
the core section (300) surrounds an inner cladding section (304) having an index of refraction lower than the index of refraction of the core section (300) providing a tubular shape of the core section (300).

2. The optical fiber according to claim 1,
wherein the optical fiber comprises an innermost section (303) having a refractive index higher than the adjacent surrounding section (300, 304) wherein the refractive index of the innermost section (303) and the adjacent surrounding section (300, 304) allow functionality of the innermost section (303) as single or low mode optical waveguide.

3. The optical fiber according to claim 2,
wherein said innermost section (303) has at least one fiber Bragg grating section in the emission area and can function as a fiberoptic stress and/or temperature sensor.

4. The optical fiber according to any one claims 1 to 3,
wherein the extension of the scattering sites (100) is bigger in the direction of the longitudinal axis (9) of the optical fiber than in a direction traverse to the longitudinal axis (9).

5. The optical fiber according to any one of claims 1 to 4,
wherein the scattering sites (100) are distributed regularly throughout the core section (300).

6. The optical fiber according to any one of claim 1 to 4,
wherein the scattering sites (100) are arranged in a circumferential pattern, the diameter of the circumferential pattern varying regularly or irregularly along the longitudinal axis (9) of the optical fiber.

7. The optical fiber according to claim 6,
wherein the scattering sites (100) are arranged in spirals (101) whose rotational symmetry axis is oriented along the longitudinal axis (9) of the optical fiber.

8. The optical fiber according to any one of claims 1 to 7,
wherein the sections (300, 301, 303, 304) of the optical fiber are made from silica glass.

9. The optical fiber according to claim 8,
wherein the scattering sites (100) are at least at a 75 µm depth or at least at a 200 µm depth from an outermost silica glass surface (305) and/or
wherein said scattering sites (100) are at a depth of about 300 µm or less from the outermost silica glass surface (305).

10. The optical fiber according to any of claims 1 to 9,
wherein the bend strength of the fiber is at least about 0.5 GPa.

11. The optical fiber according to any one of claims 1 to 10,
wherein said outermost cladding section (301) is protected by one or more non-silica protective coating and/or jacket layers (11, 12), all of which are removed above the emission area (8).

12. The optical fiber according to any one of claims 1 to 11,
wherein the emission end (3) of the optical fiber is covered with a reflective coating (10).

13. A method for manufacturing an optical fiber comprising:
an outer cladding section (301) surrounding an inner core section (300), the outer cladding section (301) having a refractive index lower than the refractive index of the core section (300) and the outer cladding section (301) and the core section (300) forming an optical light guide;
an emission area (8) associated with one emission end (3) of the optical fiber, the emission area (8) extending in the direction of a longitudinal axis (9) along the optical fiber and being arranged for emitting radiation in a lateral direction with respect to the longitudinal axis (9) of the optical fiber;
wherein within the emission area (8), the core section (300) is provided with a plurality of scattering sites (100), which are each formed by a local variation of the refractive index in the core section (300)
the method comprising the acts:
creating the scattering sites (100) by focusing femtosecond laser pulses at the intended scattering sites (100).

14. The method according to claim 13,
wherein the optical fiber is moved by a xyz positioner (404) while the optical fiber is exposed to the femtosecond laser pulses.

## Patentansprüche

1. Optische Faser mit:
einem äußeren Mantelbereich (301), der einen inneren Kernbereich (300) umgibt, wobei der äußere Mantelbereich (301) einen Brechungsindex aufweist, der niedriger ist als der Brechungsindex des Kernbereichs (300), und wobei der äußere Mantelbereich (301) und der Kernbereich (300) einen optischen Lichtleiter bilden;
einem Emissionsbereich (8), der einem Emissionsende (3) der optischen Faser zugeordnet ist, wobei sich der Emissionsbereich (8) in Richtung einer Längsachse (9) entlang der optischen Faser erstreckt und zur Abstrahlung von Strahlung in einer seitlichen Richtung in Bezug auf die Längsachse (9) der optischen Faser eingerichtet ist;
wobei innerhalb des Emissionsbereichs (8) der Kernbereich (300) mit einer Vielzahl von Streustellen (100) versehen ist, die jeweils durch eine lokale Variation des Brechungsindex im Kernbereich (300) gebildet werden,
**dadurch gekennzeichnet, dass**
der Kernbereich (300) einen inneren Mantelbereich (304) umgibt, der einen Brechungsindex aufweist, der niedriger ist als der Brechungsindex des Kernbereichs (300), wodurch eine rohrartige Form des Kernbereichs (300) bereitgestellt ist.

2. Optische Faser nach Anspruch 1,
wobei die optische Faser einen innersten Bereich (303) mit einem höheren Brechungsindex als der angrenzende umgebende Bereich (300, 304) umfasst, wobei der Brechungsindex des innersten Bereichs (303) und des angrenzenden umgebenden Bereichs (300, 304) die Funktionalität des innersten Bereichs (303) als Ein- oder Wenigmoden-Lichtwellenleiter ermöglichen.

3. Optische Faser nach Anspruch 2,
wobei der innerste Bereich (303) wenigstens einen Faser-Bragg-Gitter-Abschnitt im Emissionsbereich aufweist und als faseroptischer Spannungs- und/oder Temperatursensor fungieren kann.

4. Optische Faser nach einem der Ansprüche 1 bis 3,
wobei die Ausdehnung der Streustellen (100) in Richtung der Längsachse (9) der optischen Faser größer ist als in einer Richtung quer zur Längsachse (9).

5. Optische Faser nach einem der Ansprüche 1 bis 4,
wobei die Streustellen (100) regelmäßig über den gesamten Kernbereich (300) verteilt sind.

6. Optische Faser nach einem der Ansprüche 1 bis 4,
wobei die Streustellen (100) in einem umlaufenden Muster angeordnet sind, wobei der Durchmesser des umlaufenden Musters entlang der Längsachse (9) der optischen Faser regelmäßig oder unregelmäßig variiert.

7. Optische Faser nach Anspruch 6,
wobei die Streustellen (100) in Spiralen (101) angeordnet sind, deren Rotationssymmetrieachse entlang der Längsachse (9) der optischen Faser ausgerichtet ist.

8. Optische Faser nach einem der Ansprüche 1 bis 7,
wobei die Bereiche (300, 301, 303, 304) der optischen Faser aus Quarzglas bestehen.

9. Optische Faser nach Anspruch 8,
wobei die Streustellen (100) sich in einer Tiefe von wenigstens 75 µm oder wenigstens 200 µm von einer äußersten Quarzglasoberfläche (305) befinden und/oder
wobei die Streustellen (100) sich in einer Tiefe von etwa 300 µm oder weniger von der äußersten Quarzglasoberfläche (305) befinden.

10. Optische Faser nach einem der Ansprüche 1 bis 9,
wobei die Biegefestigkeit der Faser wenigstens etwa 0,5 GPa beträgt.

11. Optische Faser nach einem der Ansprüche 1 bis 10,
wobei der äußerste Mantelbereich (301) durch eine oder mehrere nicht-quarzhaltige Schutzschichten und/oder Hüllschichten (11, 12) geschützt ist, die jeweils über dem Emissionsbereich (8) entfernt sind.

12. Optische Faser nach einem der Ansprüche 1 bis 11,
wobei das Emissionsende (3) der optischen Faser mit einer reflektierenden Beschichtung (10) bedeckt ist.

13. Verfahren zur Herstellung einer optischen Faser, umfassend:
einen äußeren Mantelbereich (301), der einen inneren Kernbereich (300) umgibt, wobei der äußere Mantelbereich (301) einen Brechungsindex aufweist, der niedriger ist als der Brechungsindex des Kernbereichs (300), und wobei der äußere Mantelbereich (301) und der Kernbereich (300) einen optischen Lichtleiter bilden;
einen Emissionsbereich (8), der einem Emissionsende (3) der optischen Faser zugeordnet ist, wobei sich der Emissionsbereich (8) in Richtung einer Längsachse (9) entlang der optischen Faser erstreckt und zur Abstrahlung von Strahlung in einer seitlichen Richtung in Bezug auf die Längsachse (9) der optischen Faser eingerichtet ist;
wobei innerhalb des Emissionsbereichs (8) der Kernbereich (300) mit einer Vielzahl von Streustellen (100) versehen ist, die jeweils durch eine lokale Variation des Brechungsindex im Kernbereich (300) gebildet werden;
wobei das Verfahren die Schritte umfasst:
Erzeugen der Streustellen (100) durch Fokussieren von Femtosekunden-Laserpulsen auf die beabsichtigten Streustellen (100).

14. Verfahren nach Anspruch 13,
wobei die optische Faser von einem xyz-Positionierer (404) bewegt wird, während die optische Faser den Femtosekunden-Laserpulsen ausgesetzt ist.

## Revendications

1. Fibre optique comprenant :
une section de gaine externe (301) entourant une section de noyau interne (300), la section de gaine externe (301) ayant un indice de réfraction inférieur à l'indice de réfraction de la section de noyau (300), et la section de gaine externe (301) et la section de noyau (300) formant un guide lumineux optique ;
une zone d'émission (8) associée à une extrémité d'émission (3) de la fibre optique, la zone d'émission (8) s'étendant dans la direction d'un axe longitudinal (9) le long de la fibre optique et étant agencée pour émettre un rayonnement dans une direction latérale par rapport à l'axe longitudinal (9) de la fibre optique ;
dans laquelle au sein de la zone d'émission (8), la section de noyau (300) est pourvue d'une pluralité de sites de dispersion (100) qui sont chacun formés par une variation locale de l'indice de réfraction dans la section de noyau (300),
**caractérisée en ce que**
la section de noyau (300) entoure une section de gaine interne (304) ayant un indice de réfraction inférieur à l'indice de réfraction de la section de noyau (300) fournissant une forme tubulaire de la section de noyau (300).

2. Fibre optique selon la revendication 1,
dans laquelle la fibre optique comprend une section la plus interne (303) ayant un indice de réfraction supérieur à la section environnante adjacente (300, 304), dans laquelle l'indice de réfraction de la section la plus interne (303) et la section environnante adjacente (300, 304) permettent une fonctionnalité de la section la plus interne (303) en tant que guide d'ondes optiques monomodal ou à faible mode.

3. Fibre optique selon la revendication 2,
dans laquelle ladite section la plus interne (303) a au moins une section de réseau de Bragg sur fibre dans la zone d'émission et peut fonctionner en tant que capteur de charge et/ou température à fibre optique.

4. Fibre optique selon l'une quelconque des revendications 1 à 3,
dans laquelle le prolongement des sites de dispersion (100) est plus grand dans la direction de l'axe longitudinal (9) de la fibre optique que dans une direction transversale à l'axe longitudinal (9).

5. Fibre optique selon l'une quelconque des revendications 1 à 4,
dans laquelle les sites de dispersion (100) sont distribués régulièrement dans toute la section de noyau (300).

6. Fibre optique selon l'une quelconque des revendications 1 à 4,
dans laquelle les sites de dispersion (100) sont agencés en un motif circonférentiel, le diamètre du motif circonférentiel variant régulièrement ou irrégulièrement le long de l'axe longitudinal (9) de la fibre optique.

7. Fibre optique selon la revendication 6,
dans laquelle les sites de dispersion (100) sont agencés en spirales (101) dont l'axe de symétrie de rotation est orienté le long de l'axe longitudinal (9) de la fibre optique.

8. Fibre optique selon l'une quelconque des revendications 1 à 7,
dans laquelle les sections (300, 301, 303, 304) de la fibre optique sont réalisées en verre de silice.

9. Fibre optique selon la revendication 8,
dans laquelle les sites de dispersion (100) sont au moins à une profondeur de 75 µm ou au moins à une profondeur de 200 µm depuis une surface de verre de silice la plus externe (305) et/ou
dans laquelle les sites de dispersion (100) sont à une profondeur d'environ 300 µm ou moins depuis la surface de verre de silice la plus externe (305).

10. Fibre optique selon l'une quelconque des revendications 1 à 9,
dans laquelle la résistance au pliage de la fibre est d'au moins environ 0,5 GPa.

11. Fibre optique selon l'une quelconque des revendications 1 à 10,
dans laquelle ladite section de gaine la plus externe (301) est protégée par une ou plusieurs couches de revêtement protecteur et/ou d'enveloppe qui ne sont pas en silice (11, 12) dont toutes sont éliminées au-dessus de la zone d'émission (8).

12. Fibre optique selon l'une quelconque des revendications 1 à 11,
dans laquelle l'extrémité d'émission (3) de la fibre optique est recouverte d'un revêtement réfléchissant (10).

13. Procédé de fabrication d'une fibre optique comprenant :
une section de gaine externe (301) entourant une section de noyau interne (300), la section de gaine externe (301) ayant un indice de réfraction inférieur à l'indice de réfraction de la section de noyau (300), et la section de gaine externe (301) et la section de noyau (300) formant un guide lumineux optique ;
une zone d'émission (8) associée à une extrémité d'émission (3) de la fibre optique, la zone d'émission (8) s'étendant dans la direction d'un axe longitudinal (9) le long de la fibre optique et étant agencée pour émettre un rayonnement dans une direction latérale par rapport à l'axe longitudinal (9) de la fibre optique ;
dans lequel au sein de la zone d'émission (8), la section de noyau (300) est pourvue d'une pluralité de sites de dispersion (100) qui sont chacun formés par une variation locale de l'indice de réfraction dans la section de noyau (300),
le procédé comprenant les actes :
créer les sites de dispersion (100) en concentrant des impulsions laser femtoseconde au niveau des sites de dispersion prévus (100).

14. Procédé selon la revendication 13,
dans lequel la fibre optique est déplacée par un dispositif de positionnement xyz (404) tandis que la fibre optique est exposée aux impulsions laser femtoseconde.
